# EUROPEAN PATENT APPLICATION

(11) **EP 4 322 006 A1**
(43) Date of publication of application: **14.02.2024**
(21) Application number: 23191363.3
(22) Date of filing: 14.08.2023
(51) Int. Cl.: G06F 9/54, G06F 13/16, G06F 13/40

(54) **DATA STREAMING ACCELERATOR**

(30) Priority: 12.08.2022 US 202263397457 P; 12.08.2023 US 202318233308
(71) Applicant: Intel Corporation, Santa Clara, CA 95054 (US)
(72) Inventor: SANKARAN, Rajesh M., Portland, OR 97229 (US); LANTZ, Philip R., Cornelius, OR 97113 (US); JOSHI, Dhananjay A., Portland, OR 97229 (US); RANGANATHAN, Narayan, 560103 Bangalore (IN); KHOR, Hai Ming, 14000 Bukit Mertajam (MY); KUMAR, Sanjay, Hillsboro, OR 97124 (US); RAO, Nikhil, 560103 Bengaluru (IN); GAYEN, Saurabh, Portland, OR 97214 (US); KAKAIYA, Utkarsh Y., El Dorado Hills, CA 95762 (US)
(74) Representative: Samson & Partner Patentanwälte mbB

(57) **Abstract**

Methods and apparatus relating to data streaming accelerators are described. In an embodiment, a hardware accelerator such as a Data Streaming Accelerator (DSA) logic circuitry performs data movement and/or data transformation for data to be transferred between a processor (having one or more processor cores) and a storage device. Other embodiments are also disclosed and claimed.

## Description

### RELATED APPLICATION

The present application relates to and claims priority from U.S. Provisional Patent Application, Serial No. 63/397,457, filed August 12, 2022, entitled "DATA STREAMING ACCELERATOR," which is incorporated herein in its entirety and for all purposes.

### FIELD

The present disclosure generally relates to the field of data streaming. More particularly, an embodiment relates to a data streaming accelerator.

### BACKGROUND

Generally, memory used to store data in a computing system can be volatile (to store volatile information) or non-volatile (to store persistent information). Volatile data structures stored in volatile memory are generally used for temporary or intermediate information that is required to support the functionality of a program during the run-time of that program. On the other hand, persistent data structures stored in non-volatile (or persistent memory) are available beyond the run-time of a program and can be reused. Moreover, new data is typically generated as volatile data first, before a user or programmer decides to make the data persistent. For example, programmers or users may cause mapping (i.e., instantiating) of volatile structures in volatile main memory that is directly accessible by a processor. Persistent data structures, on the other hand, are instantiated on non-volatile storage devices like rotating disks attached to Input/Output (I/O or IO) buses or non-volatile memory based devices like a solid state drive.

As computing capabilities are enhanced in processors, one concern or bottleneck is the speed at which memory may be accessed by a processor. For example, to process data, a processor may need to first fetch data from a memory device. After completion of the data processing, the results may need to be stored in the memory device. Therefore, the memory access speed and/or efficiency can have a direct impact on overall system performance.

### BRIEF DESCRIPTION OF THE DRAWINGS

The detailed description is provided with reference to the accompanying figures. In the figures, the left-most digit(s) of a reference number identifies the figure in which the reference number first appears. The use of the same reference numbers in different figures indicates similar or identical items.
FIG. 1A illustrates a Data Streaming Accelerator (DSA) device, according to an embodiment.
FIG. 1B illustrates sample fields in a restricted inter-domain memory operation descriptor, according to an embodiment.
FIG. 1C illustrates a flow diagram of a method to provide inter-domain memory operations, according to an embodiment.
FIG. 1D illustrates a Command Capabilities Register (CMDCAP), according to an embodiment.
FIG. 2A shows a sample Inter-Domain Bitmap Register, according to an embodiment.
FIG. 2B illustrates a flow chart of a method to invalidate a bitmap cache, according to an embodiment.
FIG. 3 illustrates an update window descriptor, according to an embodiment.
FIG. 4 illustrates an example computing system.
FIG. 5 illustrates a block diagram of an example processor and/or System on a Chip (SoC) that may have one or more cores and an integrated memory controller.
FIG. 6(A) is a block diagram illustrating both an example in-order pipeline and an example register renaming, out-of-order issue/execution pipeline according to examples.
FIG. 6(B) is a block diagram illustrating both an example in-order architecture core and an example register renaming, out-of-order issue/execution architecture core to be included in a processor according to examples.
FIG. 7 illustrates examples of execution unit(s) circuitry.
FIG. 8 is a block diagram of a register architecture according to some examples.
FIG. 9 illustrates examples of an instruction format.
FIG. 10 illustrates examples of an addressing information field.
FIG. 11 illustrates examples of a first prefix.
FIGS. 12(A)-(D) illustrate examples of how the R, X, and B fields of the first prefix in FIG. 11 are used.
FIGS. 13(A)-(B) illustrate examples of a second prefix.
FIG. 14 illustrates examples of a third prefix.
FIG. 15 is a block diagram illustrating the use of a software instruction converter to convert binary instructions in a source instruction set architecture to binary instructions in a target instruction set architecture according to examples.

### DETAILED DESCRIPTION

In the following description, numerous specific details are set forth in order to provide a thorough understanding of various embodiments. However, various embodiments may be practiced without the specific details. In other instances, well-known methods, procedures, components, and circuits have not been described in detail so as not to obscure the particular embodiments. Further, various aspects of embodiments may be performed using various means, such as integrated semiconductor circuits ("hardware"), computer-readable instructions organized into one or more programs ("software"), or some combination of hardware and software. For the purposes of this disclosure reference to "logic" shall mean either hardware (such as logic circuitry or more generally circuitry or circuit), software, firmware, or some combination thereof.

As mentioned above, as computing capabilities are enhanced in processors, one concern or bottleneck is the speed at which memory may be accessed by a processor. Therefore, the memory access speed and/or efficiency can have a direct impact on overall system performance.

Some embodiments relate to a data streaming accelerator. In one embodiment, a data streaming accelerator provides high-performance (e.g., higher speed and/or efficiency) data copy and/or transformation acceleration. The logic circuitry of the Data Streaming Accelerator (DSA) may be provided by or implemented on an integrated circuit device with a processor, a Central Processing Unit (CPU), a Graphics Processing Unit (GPU), Graphics Processing Unit (GPU), Field-Programmable Gate Array (FPGA), etc. Further, the DSA logic may optimize streaming data movement and/or transformation operations, e.g., common with applications for high-performance storage, networking, persistent memory, and/or various data processing applications.

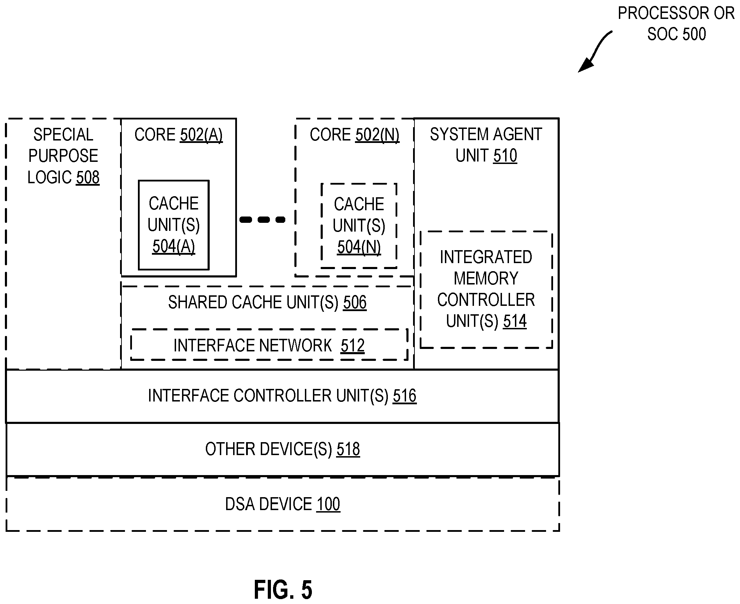

In one or more embodiments, DSA logic can provide improved virtualization efficiency enabling sharing and/or virtualization of devices. In at least one embodiment, a System-on-Chip (SoC) or a System-on-Package (SoP) may include the DSA logic and/or a processor (such as illustrated in FIG. 5).

Moreover, DSA logic may provide higher overall system performance for data mover and/or transformation operations, while freeing up CPU/processor cycles for other tasks, such as higher level functions. For example, DSA hardware may support high-performance data mover capability to/from volatile memory, persistent memory, Memory Mapped Input/Output (MMIO), and through a Non-Transparent Bridge (NTB) in an SoC/SoP to/from remote volatile and/or persistent memory on another node in a cluster. It may also provide a Peripheral Component Interconnect express (PCIe) compatible programming interface to the Operating System (OS) and/or may be controlled through a device driver.

In addition to performing general data mover operations, DSA logic may be designed to perform some number of higher-level transformation operations on memory. For example, it may generate and test a Cyclic Redundancy Code (CRC) checksum or Data Integrity Field (DIF) in a memory region to support usages typical with storage and/or networking applications. It may additionally support a memory compare operation for equality, generate a delta record, and/or apply a delta record to a buffer. These may be compared and the delta generate/merge functions may be utilized by applications such as Virtual Machine (VM) migration, VM fast check-pointing, and/or software managed memory deduplication usages.

Further examples of DSA logic features may be found in appendices A and/or B provided in the U.S. Provisional Patent Application, Serial No. 63/397,457, filed August 12, 2022, entitled "DATA STREAMING ACCELERATOR," which is incorporated herein in its entirety and for all purposes. However, embodiments are not limited to each and every feature discussed in appendices A and/or B, and DSA implementation may be adjusted for a given design and/or feature set. Also, Intel^{®} Data Streaming Accelerator Architecture Specification, Revision 2.0, September 2022, may be referenced for DSA logic features.

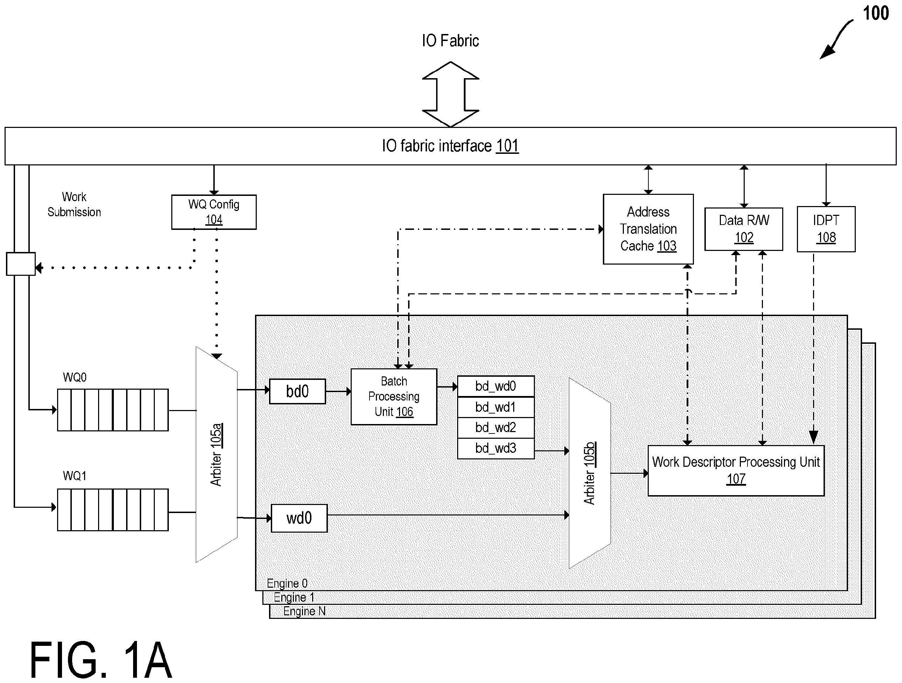

FIG. 1A illustrates a Data Streaming Accelerator (DSA) device 100, according to an embodiment. Downstream work requests from clients are received on the I/O fabric interface 101. Upstream data read/write operations (102) and address translation operations (103) are sent on the I/O fabric interface 101 as well. As shown in FIG. 1A, the device includes one or more Work Queue (WQ) configuration registers 104, Work Queues (labeled as WQ0 and WQ1) to hold descriptors submitted by software, arbiters 105a/105b used to implement Quality of Service (QoS) and fairness policies, processing engines, address translation logic circuitry and caching interface 103, and a memory read/write interface 102. The batch processing unit 106 processes Batch descriptor(s) (bd) by reading the array of descriptors from memory. The work descriptor processing unit 107 has stages to read memory, perform the requested operation on the data, generate output data, and write output data, completion records, and interrupt messages.

The WQ configuration logic circuitry 104 allows software to configure each WQ either as a Shared Work Queue (SWQ) that can be shared by multiple software components/applications, or as a Dedicated Work Queue (DWQ) that is assigned to a single software component/application at a time. This configuration also allows software to control which WQs feed into which engines and the relative priorities of the WQs feeding each engine.

In an embodiment, each work descriptor (wd) submitted to the DSA device 100 is associated with a default address space, which corresponds to the address space of the work submitter. As discussed herein, a Process Address Space Identifier (PASID) generally refers to a value used in memory transactions to convey an address space on a host of an address used by a device. While a PASID capability is enabled, the default address space is explicitly specified, either by the PASID carried in the work descriptor submitted to a shared work queue, or by the PASID configured in the Work Queue Configuration (WQCFG) register for a dedicated work queue. Memory accesses and Input/Output Memory Management Unit (IOMMU) requests are tagged with this PASID value.

While the PASID capability is disabled, the default address space is implicitly specified to the IOMMU via the Peripheral component Interconnect express (PCIe) requester identifier (ID) (bus, device, function) of the device. This address space for a work submitter may be referred to as the descriptor PASID, and this is the address space that descriptors from that submitter normally use for memory accesses and IOMMU requests from the DSA device.

While the PASID capability is enabled, certain operations may allow a submitter to select an alternate address space for either the source addresses, destination addresses, or both source and destination addresses specified in a work descriptor. The alternate address space may be that of a cooperating process. This process may be referred to as the owner of that alternate address space. The set of operations that allow selection of an alternate address space may be referred to as inter-domain operations.

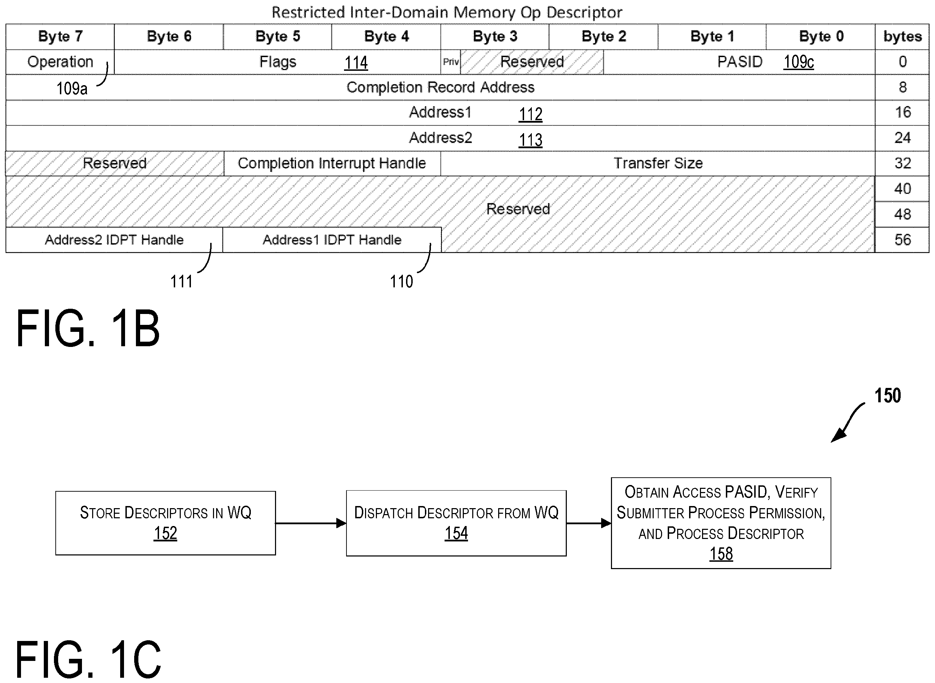

In an embodiment, inter-domain operations may operate on multiple address spaces (identified by PASIDs) with a single descriptor. In one embodiment, the inter-domain operations require the PASID capability to be enabled. Support for inter-domain operations is indicated by the Inter-Domain Support field in a General Capabilities register (GENCAP) register in an embodiment. For example, when this field is 1, inter-domain capabilities are reported in an Inter-Domain Capabilities (IDCAP) register. The set of inter-domain operations supported by an implementation are reported in an Operations Capabilities (OPCAP) register and may be used only if the inter-domain capability is supported. Selection of PASIDs used in each operation may be done using appropriate descriptor fields. Some details of the inter-domain operations supported, along with a description of the corresponding descriptor fields, is discussed below with reference to FIG. 1B.

If a work submitter does not explicitly select an alternate PASID for an address in a descriptor, the descriptor PASID is used for memory accesses and IOMMU requests pertaining to that address. If a descriptor selects an alternate PASID for an address, that PASID is used instead of the descriptor PASID, if the submitter has appropriate permissions to do so. When used in this manner, the alternate PASID may be referred to as the "access PASID" for the corresponding address in a descriptor. The device uses the access PASID to perform memory accesses and IOMMU requests pertaining to that address. The descriptor PASID is used to write the completion record, for interrupt generation, and to verify whether a submitter has adequate permissions to the specified access PASID, as described below.

In at least one embodiment, an inter-domain operation may involve two or three PASIDs depending on the use case. Some of the sample use cases are listed below:
1. Data read or write by one or more user-mode submitters from or to a memory region exported by a user-mode owner.
2. Data read or write by a kernel-mode submitter from or to a memory region of a user-mode process.
3. Data read or write by a kernel-mode submitter between memory regions of two distinct user-mode processes.
4. Data read or write by a kernel-mode submitter from or to a memory region of another kernel-mode process.
5. Data read or write by a privileged submitter between memory regions of two distinct guest OSes.
6. Any of the above executed within a guest Operation System (OS).

Use case (1) above requires an owner to explicitly grant access to a portion of its memory space to one or more submitters. The memory region that an owner grants access to is referred to as a memory window. A memory window is only accessible using the owner's PASID as the access PASID. Use cases (2) to (6) involve privileged software accessing memory regions of other user-mode or kernel-mode processes within that OS domain. This may require flexibility and low overhead for a privileged submitter to explicitly specify a PASID for each address in a descriptor, but without compromising security.

Referring to FIG. 1A, if inter-domain operations are supported, DSA implements an Inter-Domain Permissions Table (IDPT) 108 to allow software to manage: (1) the association between a descriptor PASID and an access PASID that a work submitter is allowed to access; (2) attributes of a memory region in an access PASID's memory space that a submitter is allowed to access; and/or (3) controls to manage the life cycle of such association. The IDPT may be managed by the host kernel-mode driver and may be configured to support uses for both kernel-mode and user-mode applications, in a host or guest OS.

FIG. 1B illustrates sample fields in a restricted inter-domain memory operation descriptor, according to some embodiments.

In one or more embodiments, each entry in the IDPT contains the following: (1) an entry type as described below; (2) one or more submitter PASID values allowed to use that entry and a mechanism to validate them; (3) depending on the entry type, an access PASID to be used for memory accesses; (4) memory window address range and attributes; and/or (5) permissions and other control information.

Each IDPT Entry (IDPTE) may be configured in one of the following ways as indicated by the Type field described below and summarized in Table 1:
- Type 0 - Single Access, Single Submitter (SASS): The IDPTE specifies a single access PASID and a single submitter PASID. For example, a process that wants to expose a memory window to a peer process may request the driver to set up an SASS entry with its own PASID as the access PASID and the PASID of its peer as the submitter PASID.
- Type 1 - Single Access, Multiple Submitter (SAMS): The IDPTE specifies a single access PASID. The submitter PASID field in the entry is unused. Instead, the IDPTE points to a bitmap in memory which specifies the set of submitter PASIDs allowed to use the entry. A bit set to 1 in the bitmap indicates that the corresponding PASID is allowed to submit an inter-domain operation using the IDPTE. For example, a process that wants to allow multiple submitters to access a window in its address space requests a SAMS entry to be set up.

**Table 1: Inter-Domain Permissions Table Entry Types**

| **Type** | **Mnemonic** | **Description** | **Access PASID obtained from** | **Submitter PASID matched against** |
|---|---|---|---|---|
| 00 | SASS | Single Access, Single-submitter entry (1 access PASID, 1 submitter PASID) | IDPT entry | IDPT entry |
| 01 | SAMS | Single Access, Multi-submitter entry (1 access PASID, N submitter PASIDs) | IDPT entry | Bitmap |

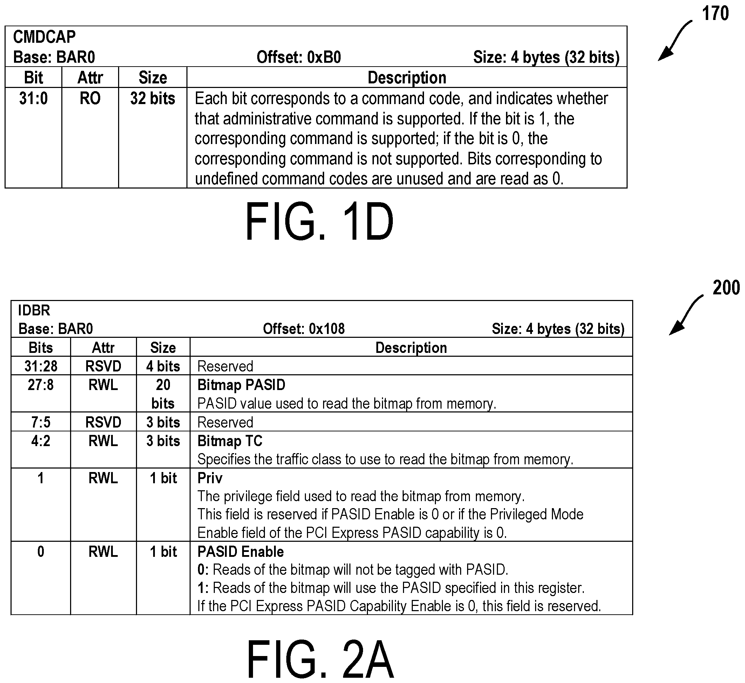

As discussed herein, a "descriptor" generally refers to an IDPT entry using a handle in the descriptor. If the Request IDPT Handle field in Command Capabilities ("CMDCAP," see, e.g., FIG. 1D) is 0, the handle is the index of the desired entry in the IDPT. If the Request IDPT Handle field in CMDCAP register is 1, software uses the Request IDPT Handle command to obtain the handle to use. Software specifies in the Request IDPT Handle command the index of the PASID table entry for which it wants a handle, and the response to the command contains the handle that software should place in the descriptor.

In some embodiments, an inter-domain descriptor may contain more than one handle, depending on the type of operation. A separate handle may be specified for each distinct source and/or destination address in a descriptor. Each handle in a descriptor is used by hardware to look up the corresponding IDPTE to: (1) validate access permissions for the submitter, (2) identify the access PASID and privilege to be used for memory access, (3) compute the effective memory address, and/or (4) verify that the access conforms to the memory window and permissions granted by the IDPTE.

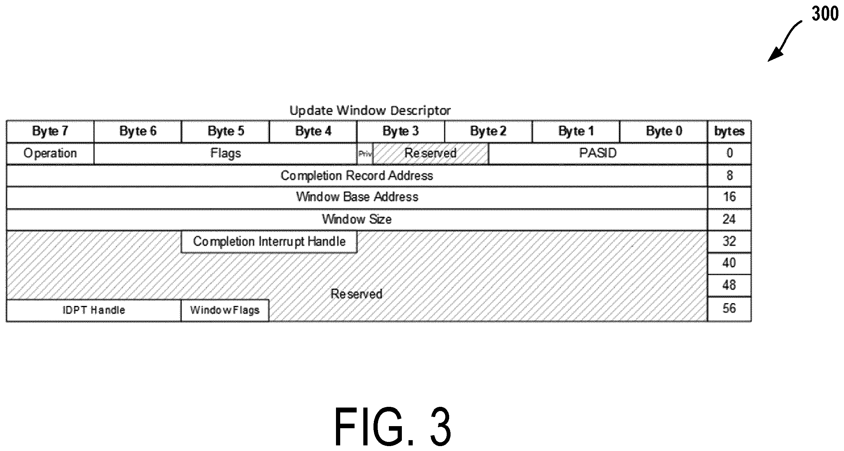

In an embodiment, an IDPTE may be referenced by:
(a) An inter-domain descriptor while the Usable bit in the IDPTE is 1. In this case, the hardware checks that the descriptor PASID matches a submitter PASID value in the specified IDPTE.
(b) An Update Window descriptor (see, e.g., FIG. 3) while the Allow Update bit in the IDPTE is 1. In this case, the hardware checks whether the descriptor PASID matches the access PASID value in the specified IDPTE.

If the PASID values do not match, then memory accesses using that entry are disallowed for that descriptor, and the descriptor is completed with an error. Furthermore, type 0 SASS and type 1 SAMS IDPTEs may only be used with Restricted Inter-Domain operations (see, e.g., FIG. 1B).

FIG. 1B illustrates details of a restricted descriptor for the Inter-Domain operations in accordance with an embodiment. In some embodiments, one or more of the following new operations support Inter-Domain capabilities:
(1) Restricted Inter-Domain Memory Copy (to copy data from the source address to the destination address);
(2) Restricted Inter-Domain Fill (to fill memory at the destination address with the value in the pattern field);
(3) Restricted Inter-Domain Compare (to compare data at source 1 address with memory at source 2 address);
(4) Restricted Inter-Domain Compare Pattern (to compare data at the source address with the value in the pattern field); and/or
(5) Restricted Inter-Domain Cache Flush (to flush the processor caches at the destination address).

Further, an Update Window operation may atomically modify attributes of the memory window associated with the specified Inter-Domain Permissions Table entry.

Referring to FIG. 1B, a restricted inter-domain descriptor includes an operation field 109a capable of specifying an operation to be performed (such as discussed above, including, for example, copy, fill, compare, compare pattern, flush, etc.), a PASID field 109c capable of specifying a submitter PASID of a submitter process executing on a (e.g., host) processor, and an IDPT handle field 110/111 capable of specifying an IDPT entry.

As shown in FIG. 1B, the descriptor for a Restricted Inter-Domain operation allows software to specify an IDPT handle 110/111 for each source or destination address 112/113. The IDPT handle 110/111 references a type 0 SASS or type 1 SAMS IDPTE (described above). There is at least one valid IDPT handle indicated by the corresponding flags bit 114 set to 1.

In one embodiment, IDPT handle(s) 110/111 may be used to lookup an access PASID capable of specifying an access PASID associated with the address space of another process. This approach is envisioned to provide higher security/privacy since the submitter is not necessarily trusted to specify an access PASID. Instead, the submitter points to an IDPT entry that the device can first check to ensure that the correct submitter PASID is using this entry, and then utilize the access PASID in the IDPT entry as source or destination for the descriptor operation. Hence, as discussed herein, an "access PASID" generally refers to the PASID being accessed for reading or writing. As a result, an access PASID may be a source access PASID or a destination access PASID. In some embodiments, access PASIDs are referenced in the new descriptor via IDPT handle(s) 110/111 shown in FIG. 1B to allow for access to alternative address spaces.

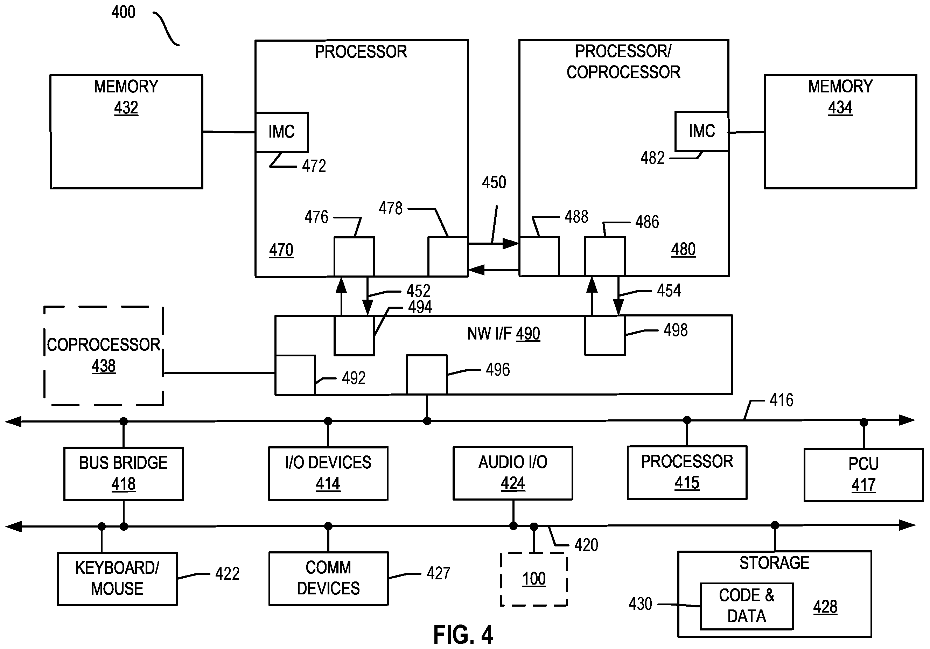

FIG. 1C illustrates a flow diagram of a method 150 to provide inter-domain memory operations, according to an embodiment. One or more components discussed herein may be utilized to perform the operations of method 150 such as a hardware accelerator (e.g., DSA 100 of FIG. 1A) and/or a processor (such as discussed with reference to FIGs. 4 et seq.

Referring to FIGs. 1A-1C, at an operation 152 a plurality of descriptors are stored in a work queue (e.g., WQ0 or WQ1 of FIG. 1A). At an operation 154, an arbiter (e.g., arbiter 105a of FIG. 1A) dispatches a descriptor from the work queue. As discussed with reference to FIG. 1B, the descriptor may include: an operation field capable of specifying an operation to be performed, a PASID field capable of specifying a submitter PASID of a submitter process, an Inter-Domain Permissions Table (IDPT) handle field capable of specifying an IDPT entry, and optionally an access PASID field capable of specifying an access PASID associated with the address space of another process.

At an operation 158, for a restricted inter-domain memory operation descriptor (such as shown in FIG. 1B), an engine (e.g., one of the engines 0-N of FIG. 1A): (a) obtains an access PASID, associated with an address space of another process, from the IDPT entry; (b) verifies, based at least in part on the submitter PASID and the IDPT entry, whether the submitter process is permitted to access the address space of the other process; and (c) processes (e.g., by the work descriptor processing unit 107 of FIG. 1A) the descriptor based at least in part on the operation specified by the operation field. In one or more embodiments, the operation to be performed is one of: a copy operation, a fill operation, a compare operation, a compare pattern operation, and a flush operation.

Moreover, in various embodiments: (a) an IDPT entry may specify a single access PASID and a single submitter PASID; (b) an IDPT entry may specify a single access PASID and a plurality of submitter PASIDs; and/or (c) a plurality of submitter PASIDs may be specified by a PASID bitmap in memory, as will be further discussed below.

FIG. 1D illustrates a Command Capabilities Register (CMDCAP) 170, according to an embodiment. The Command Capabilities register indicates which administrative commands are supported by the Command register. This register is a bitmask where each bit corresponds to the command with the same command code as the bit position. For example, bit 1 of this register corresponds to the Enable Device command (command code 1).

In an embodiment, this register is present only if the Command Capabilities Support field in GENCAP is 1. If this register indicates support for the Request Interrupt Handle command, then the command is used to obtain interrupt handles to use for descriptor completions. If Command Capabilities Support is 0, this register is not present and the following commands in Table 2 are supported:

**Table 2: Default Commands Supported**

| **Command** | **Code** | **Operation** |
|---|---|---|
| Enable Device | 1 | Enable the device. |
| Disable Device | 2 | Disable the device. |
| Drain All | 3 | Wait for all descriptors. |
| Abort All | 4 | Abandon and/or wait for all descriptors. |
| Reset Device | 5 | Disable the device and clear the device configuration. |
| Enable WQ | 6 | Enable the WQ. |
| Disable WQ | 7 | Disable the specified WQs. |
| Drain WQ | 8 | Wait for descriptors in the specified WQs. |
| Abort WQ | 9 | Abandon and/or wait for descriptors in the specified WQs. |
| Reset WQ | 10 | Disable the specified WQs and clear the WQ configurations. |
| Drain PASID | 11 | Wait for descriptors using the specified PASID. |
| Abort PASID | 12 | Abandon and/or wait for descriptors using the specified PASID. |

### SUBMITTER BITMAP

In an embodiment, a type 1 SAMS IDPTE points to a submitter bitmap in memory, with one bit for every possible PASID value. The bitmap is indexed by the PASID value to be checked against the bitmap. Access is allowed only if the bit corresponding to the checked PASID is 1 in the bitmap. For a SAMS IDPTE, hardware checks the descriptor PASID against the bitmap prior to allowing any memory access using the table entry. A type 1 SAMS entry specifies a 4KB aligned virtual or physical address, referred to as the Submitter Bitmap Address. Privileged software like the kernel-mode driver is responsible for setting up and maintaining the bitmap in memory. The maximum size of a submitter bitmap is 2²⁰ bits, i.e., 128KB. Each IDPTE that requires a bitmap may point to a distinct submitter bitmap in memory. Software may also choose to share a submitter bitmap between multiple IDPTEs, if appropriate.

In one embodiment, an Inter-Domain Bitmap Register (IDBR) controls whether hardware should use a PASID value for submitter bitmap reads. FIG. 2A shows a sample Inter-Domain Bitmap Register 200, according to an embodiment.

If enabled, the IDBR specifies the PASID value and privilege to be used for bitmap reads. Although each submitter bitmap is mapped to a contiguous virtual address range in the corresponding PASID space, it may be mapped into discontiguous physical pages in system memory. Software is also not required to map the bitmap entirely into system memory at a given time; different bitmap pages may be mapped as needed. If a page of a bitmap is inaccessible, all bits on that page are treated as 0. Depending on the IOMMU configuration, faults may be reported on pages that are not mapped. To avoid these faults, software can pin all memory pages corresponding to the bitmap. The IDBR also specifies the traffic class to be used for bitmap reads.

In one embodiment, if the Inter-Domain Support field in GENCAP is 1, and bit 1 is set in the Type Support field in IDCAP, the Inter-Domain Bitmap register is used to specify the PASID and Privilege to be used to read bitmaps referenced by the IDPT. Otherwise this register is reserved. This register is read-write while the device is Disabled and read-only otherwise.

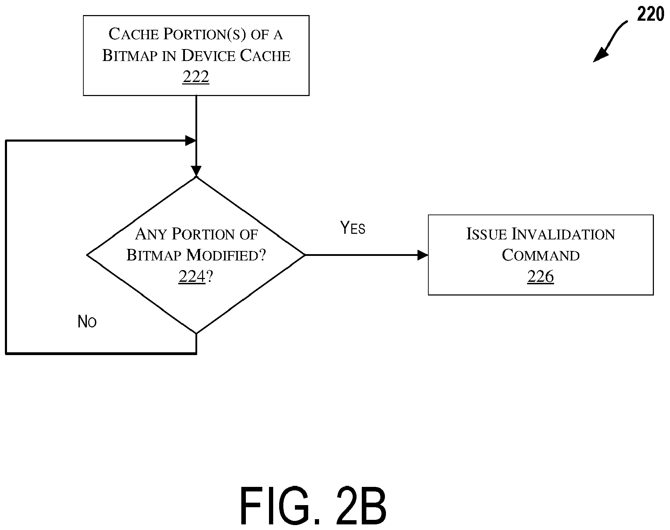

FIG. 2B illustrates a flow chart of a method 220 to invalidate a bitmap cache, according to an embodiment. Bitmap read operations may be done by hardware in an implementation-specific manner. An implementation may issue bitmap reads as either Translated or Untranslated accesses. Hardware may read a single byte or dword or a cache line or larger region of a bitmap, corresponding to the PASID to be checked. For example, for a PASID value of p to be checked against a bitmap, an implementation that uses cache line reads of the bitmap would read the cache line at (PPBA + ((p >> 3) & 0xFFFFFFC0)) and examine the bit corresponding to the PASID to be checked.

Referring to FIG. 2B, portions of a bitmap may be cached in a device cache at operation 222, e.g., to avoid repeated memory read accesses. This capability, if supported, may be indicated by an Invalidate Submitter Bitmap Cache field in CMDCAP of FIG. 1D. If this capability is enabled (e.g., 1), at operation 226, software issues the Invalidate Submitter Bitmap Cache command after it modifies (e.g., as determined at operation 224) any portion of a bitmap in memory or modifies the mapping of any page of the bitmap. In the latter case, software performs the bitmap invalidation after it performs any required invalidations normally associated with page mapping modifications. Moreover, such techniques support any possible caching of bitmap values for devices that support on-device bitmap caching. A bitmap may contain system level permission mappings, and multiple devices on a system may have opportunistic cached entries from the single system-level bitmap. The invalidation flow may be done for all such devices, e.g., to ensure that any stale cached entries are cleared.

### MEMORY WINDOW

As discussed herein, a "memory window" is a region of memory in an owner's address space that it allows one or more submitters to access. It can be defined by the window base address, window size, window mode and access permissions fields in the IDPTE. The window attributes may be initialized at the same time an IDPTE is allocated by the kernel-mode driver to an owner or to a privileged submitter. The Window Enable field in an IDPTE controls whether a memory window is active for that IDPTE.

If Window Enable is 0, hardware does not perform an address range check when using that entry. A validated submitter is allowed to access any address in the address space, and the Window Mode, Window Base and Window Size fields are reserved.

If Window Enable is 1, hardware checks whether the memory region in a descriptor referencing the IDPTE falls within the memory window. The memory window does not wrap around the 2⁶⁴ address boundary. The Window Mode field controls the interpretation of the address in a descriptor referencing the IDPTE.

In some embodiments, two window modes are supported:
(1) Address Mode: Hardware checks that the memory region in the descriptor that references the IDPTE lies within the window, i.e., between the window base address and the sum of window base address and window size.
(2) Offset Mode: The address of the memory region in the descriptor is treated as an offset from the window base address. The effective start of the memory region is computed as the sum of the window base address and the address in the descriptor referencing that IDPTE. The effective end of the memory region is the sum of the effective start address and region size. The effective start and end of the memory region lies within the window.

An IDPTE specifies read and write permissions for memory accesses using that entry. If the requested permissions do not match the granted permissions, the access is denied.

### MEMORY WINDOW MODIFICATION

For a SASS or SAMS IDPTE, if the Allow Update bit in the IDPTE is 1, the owner may modify the memory window attributes using an Update Window descriptor (see, e.g., FIG. 3). Only the process whose PASID matches the access PASID in the IDPTE is allowed to issue the Update Window. If the descriptor PASID does not match the access PASID, the Update Window descriptor is completed with an error.

While Allow Update is 0 for an IDPTE, the entry may be modified by the kernel-mode driver using MMIO writes while the IDPTE is not usable.

FIG. 3 illustrates an update window descriptor 300, according to an embodiment. The Update Window descriptor atomically changes only the values of Window Base, Window Size, Window Mode, Read and Write permissions, and the Window Enable field in the IDPTE. Since the update is done atomically by hardware, any inter-domain descriptor referencing the IDPTE at the same time, is guaranteed to see either the old value or the new value of the window attributes.

After the atomic update is done, an Update Window descriptor may also perform an implicit drain to flush out any in-flight descriptors that are still using pre-update window attributes of that IDPTE. This ensures that when an Update Window operation is completed, any descriptors referencing that IDPTE have also completed. In an embodiment, an Update Window descriptor also allows for the implicit drain to be suppressed, if necessary.

Moreover, the Update Window operation, 0x21, atomically modifies attributes of the memory window associated with the specified Inter-Domain Permissions Table entry. The descriptor PASID has to match the access PASID in the entry referenced by the handle, and the Allow Update bit in the entry has to be 1. There are no alignment requirements for the Window Base Address or the Window Size fields. If the Window Enable field in Window Flags is 1, the sum of Window Base Address and Window Size in the descriptor has to be less than or equal to 2⁶⁴. If Window Enable is 0, then the Window Mode, Window Base Address and Window Size fields in the descriptor has to be 0.

In one embodiment, an implicit drain is performed to flush out any in-flight descriptors that are still using pre-update window attributes. Software can use the Suppress Drain flag to avoid the implicit drain if necessary. Further, an Update Window descriptor may not be included in a batch; it is treated as an unsupported operation type.

Table 3 shows sample window flags for update window descriptor and Table 4 shows update window operation-specific flags.

**Table 3: Window Flags**

| **Bits** | **Description** |
|---|---|
| 7:4 | **Reserved:** is 0. |
| 3 | **Window Mode** |
| | **0:** Window operates in Address mode. |
| | **1:** Window operates in Offset mode. |
| | This field is reserved if Window Enable is 0 or if Offset Mode Support in IDCAP is 0. |
| 2 | **Window Enable** |
| | **0:** The window address range checks are disabled, and hardware will not perform range |
| | checks on the incoming address. |
| | **1:** The window address range checks are enabled, and hardware will perform range |
| | checks on the incoming address based on the window mode. |
| 1 | **Write Permissions** |
| | **0:** Disallows memory write using this entry. |
| | **1:** Allows memory writes using this entry. |
| 0 | **Read Permissions** |
| | **0:** Disallows memory reads using this entry. |
| | **1:** Allows memory reads using this entry. |

**Table 4: Update Window Operation-specific Flags**

| **Bits** | **Description** |
|---|---|
| 23:17 | **Reserved:** is 0. |
| 16 | **Suppress Drain** |
| | **0:** Drain any descriptors using prior values of the IDPTE fields modified by this descriptor. |
| | **1:** No drain is performed. |
| | This field is reserved if Update Window Suppress Drain Support in IDCAP is 0. |

Additionally, some embodiments may be applied in computing systems that include one or more processors (e.g., where the one or more processors may include one or more processor cores), such as those discussed with reference to FIGs. 1A et seq., including for example a desktop computer, a work station, a computer server, a server blade, or a mobile computing device. The mobile computing device may include a smartphone, tablet, UMPC (Ultra-Mobile Personal Computer), laptop computer, Ultrabook^{™} computing device, wearable devices (such as a smart watch, smart ring, smart bracelet, or smart glasses), etc.

FIG. 4 illustrates an example computing system. Multiprocessor system 400 is an interfaced system and includes a plurality of processors or cores including a first processor 470 and a second processor 480 coupled via an interface 450 such as a point-to-point (P-P) interconnect, a fabric, and/or bus. In some examples, the first processor 470 and the second processor 480 are homogeneous. In some examples, first processor 470 and the second processor 480 are heterogeneous. Though the example system 400 is shown to have two processors, the system may have three or more processors, or may be a single processor system. In some examples, the computing system is a system on a chip (SoC).

Processors 470 and 480 are shown including integrated memory controller (IMC) circuitry 472 and 482, respectively. Processor 470 also includes interface circuits 476 and 478; similarly, second processor 480 includes interface circuits 486 and 488. Processors 470, 480 may exchange information via the interface 450 using interface circuits 478, 488. IMCs 472 and 482 couple the processors 470, 480 to respective memories, namely a memory 432 and a memory 434, which may be portions of main memory locally attached to the respective processors.

Processors 470, 480 may each exchange information with a network interface (NW I/F) 490 via individual interfaces 452, 454 using interface circuits 476, 494, 486, 498. The network interface 490 (e.g., one or more of an interconnect, bus, and/or fabric, and in some examples is a chipset) may optionally exchange information with a coprocessor 438 via an interface circuit 492. In some examples, the coprocessor 438 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 470, 480 or outside of both processors, yet connected with the processors via an interface such as P-P interconnect, such that either or both processors' local cache information may be stored in the shared cache if a processor is placed into a low power mode.

Network interface 490 may be coupled to a first interface 416 via interface circuit 496. In some examples, first interface 416 may be an interface such as a Peripheral Component Interconnect (PCI) interconnect, a PCI Express interconnect or another I/O interconnect. In some examples, first interface 416 is coupled to a power control unit (PCU) 417, which may include circuitry, software, and/or firmware to perform power management operations with regard to the processors 470, 480 and/or co-processor 438. PCU 417 provides control information to a voltage regulator (not shown) to cause the voltage regulator to generate the appropriate regulated voltage. PCU 417 also provides control information to control the operating voltage generated. In various examples, PCU 417 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 417 is illustrated as being present as logic separate from the processor 470 and/or processor 480. In other cases, PCU 417 may execute on a given one or more of cores (not shown) of processor 470 or 480. In some cases, PCU 417 may be implemented as a microcontroller (dedicated or general-purpose) or other control logic configured to execute its own dedicated power management code, sometimes referred to as P-code. In yet other examples, power management operations to be performed by PCU 417 may be implemented externally to a processor, such as by way of a separate power management integrated circuit (PMIC) or another component external to the processor. In yet other examples, power management operations to be performed by PCU 417 may be implemented within BIOS or other system software.

Various I/O devices 414 may be coupled to first interface 416, along with a bus bridge 418 which couples first interface 416 to a second interface 420. In some examples, one or more additional processor(s) 415, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 416. In some examples, second interface 420 may be a low pin count (LPC) interface. Various devices may be coupled to second interface 420 including, for example, a keyboard and/or mouse 422, communication devices 427 and storage circuitry 428. Storage circuitry 428 may be one or more non-transitory machine-readable storage media as described below, such as a disk drive or other mass storage device which may include instructions/code and data 430 and may implement the storage 103 in some examples. Further, an audio I/O 424 may be coupled to second interface 420. Note that other architectures than the point-to-point architecture described above are possible. For example, instead of the point-to-point architecture, a system such as multiprocessor system 400 may implement a multi-drop interface or other such architecture.

### EXAMPLE CORE ARCHITECTURES, PROCESSORS, AND COMPUTER ARCHITECTURES.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

FIG. 5 illustrates a block diagram of an example processor and/or SoC 500 that may have one or more cores and an integrated memory controller. The solid lined boxes illustrate a processor 500 with a single core 502(A), system agent unit circuitry 510, and a set of one or more interface controller unit(s) circuitry 516, while the optional addition of the dashed lined boxes illustrates an alternative processor 500 with multiple cores 502(A)-(N), a set of one or more integrated memory controller unit(s) circuitry 514 in the system agent unit circuitry 510, and special purpose logic 508, as well as a set of one or more interface controller units circuitry 516. Note that the processor 500 may be one of the processors 470 or 480, or co-processor 438 or 415 of FIG. 4.

Thus, different implementations of the processor 500 may include: 1) a CPU with the special purpose logic 508 being integrated graphics and/or scientific (throughput) logic (which may include one or more cores, not shown), and the cores 502(A)-(N) being one or more general purpose cores (e.g., general purpose in-order cores, general purpose out-of-order cores, or a combination of the two); 2) a coprocessor with the cores 502(A)-(N) being a large number of special purpose cores intended primarily for graphics and/or scientific (throughput); and 3) a coprocessor with the cores 502(A)-(N) being a large number of general purpose in-order cores. Thus, the processor 500 may be a general-purpose processor, coprocessor or special-purpose processor, such as, for example, a network or communication processor, compression engine, graphics processor, GPGPU (general purpose graphics processing unit), a high throughput many integrated core (MIC) coprocessor (including 30 or more cores), embedded processor, or the like. The processor may be implemented on one or more chips. The processor 500 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 504(A)-(N) within the cores 502(A)-(N), a set of one or more shared cache unit(s) circuitry 506, and external memory (not shown) coupled to the set of integrated memory controller unit(s) circuitry 514. The set of one or more shared cache unit(s) circuitry 506 may include one or more mid-level caches, such as level 2 (L2), level 3 (L3), level 4 (L4), or other levels of cache, such as a last level cache (LLC), and/or combinations thereof. While in some examples interface network circuitry 512 (e.g., a ring interconnect) interfaces the special purpose logic 508 (e.g., integrated graphics logic), the set of shared cache unit(s) circuitry 506, and the system agent unit circuitry 510, alternative examples use any number of well-known techniques for interfacing such units. In some examples, coherency is maintained between one or more of the shared cache unit(s) circuitry 506 and cores 502(A)-(N). In some examples, interface controller units circuitry 516 couple the cores 502 to one or more other devices 518 such as one or more I/O devices, storage, one or more communication devices (e.g., wireless networking, wired networking, etc.), etc.

In some examples, one or more of the cores 502(A)-(N) are capable of multi-threading. The system agent unit circuitry 510 includes those components coordinating and operating cores 502(A)-(N). The system agent unit circuitry 510 may include, for example, power control unit (PCU) circuitry and/or display unit circuitry (not shown). The PCU may be or may include logic and components needed for regulating the power state of the cores 502(A)-(N) and/or the special purpose logic 508 (e.g., integrated graphics logic). The display unit circuitry is for driving one or more externally connected displays.

The cores 502(A)-(N) may be homogenous in terms of instruction set architecture (ISA). Alternatively, the cores 502(A)-(N) may be heterogeneous in terms of ISA; that is, a subset of the cores 502(A)-(N) may be capable of executing an ISA, while other cores may be capable of executing only a subset of that ISA or another ISA.

### EXAMPLE CORE ARCHITECTURES - IN-ORDER AND OUT-OF-ORDER CORE BLOCK DIAGRAM.

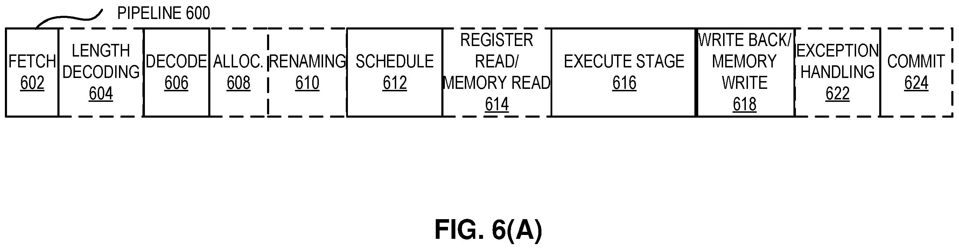

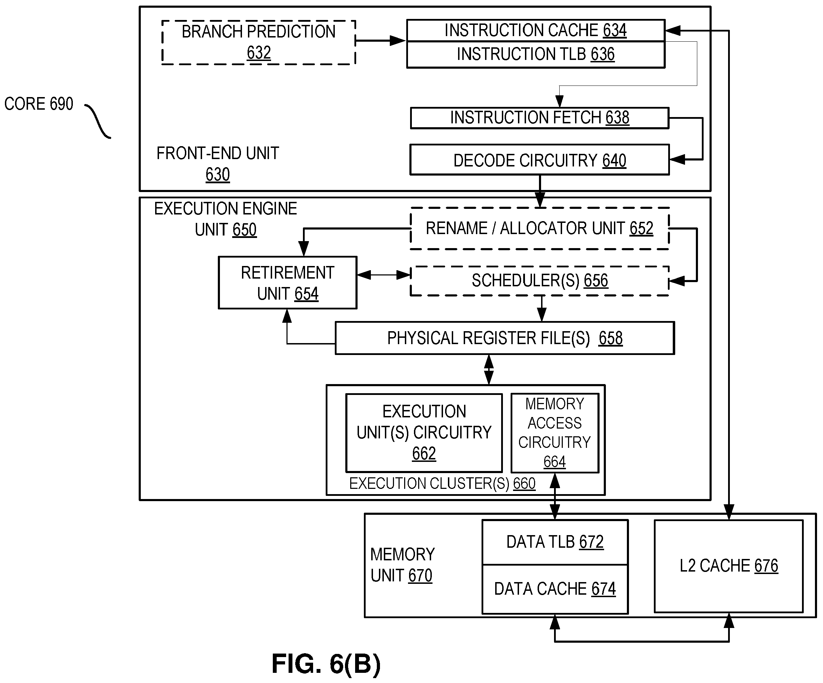

FIG. 6(A) is a block diagram illustrating both an example in-order pipeline and an example register renaming, out-of-order issue/execution pipeline according to examples. FIG. 6(B) is a block diagram illustrating both an example in-order architecture core and an example register renaming, out-of-order issue/execution architecture core to be included in a processor according to examples. The solid lined boxes in FIGS. 6(A)-(B) illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 6(A), a processor pipeline 600 includes a fetch stage 602, an optional length decoding stage 604, a decode stage 606, an optional allocation (Alloc) stage 608, an optional renaming stage 610, a schedule (also known as a dispatch or issue) stage 612, an optional register read/memory read stage 614, an execute stage 616, a write back/memory write stage 618, an optional exception handling stage 622, and an optional commit stage 624. One or more operations can be performed in each of these processor pipeline stages. For example, during the fetch stage 602, one or more instructions are fetched from instruction memory, and during the decode stage 606, the one or more fetched instructions may be decoded, addresses (e.g., load store unit (LSU) addresses) using forwarded register ports may be generated, and branch forwarding (e.g., immediate offset or a link register (LR)) may be performed. In one example, the decode stage 606 and the register read/memory read stage 614 may be combined into one pipeline stage. In one example, during the execute stage 616, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of FIG. 6(B) may implement the pipeline 600 as follows: 1) the instruction fetch circuitry 638 performs the fetch and length decoding stages 602 and 604; 2) the decode circuitry 640 performs the decode stage 606; 3) the rename/allocator unit circuitry 652 performs the allocation stage 608 and renaming stage 610; 4) the scheduler(s) circuitry 656 performs the schedule stage 612; 5) the physical register file(s) circuitry 658 and the memory unit circuitry 670 perform the register read/memory read stage 614; the execution cluster(s) 660 perform the execute stage 616; 6) the memory unit circuitry 670 and the physical register file(s) circuitry 658 perform the write back/memory write stage 618; 7) various circuitry may be involved in the exception handling stage 622; and 8) the retirement unit circuitry 654 and the physical register file(s) circuitry 658 perform the commit stage 624.

FIG. 6(B) shows a processor core 690 including front-end unit circuitry 630 coupled to execution engine unit circuitry 650, and both are coupled to memory unit circuitry 670. The core 690 may be a reduced instruction set architecture computing (RISC) core, a complex instruction set architecture computing (CISC) core, a very long instruction word (VLIW) core, or a hybrid or alternative core type. As yet another option, the core 690 may be a special-purpose core, such as, for example, a network or communication core, compression engine, coprocessor core, general purpose computing graphics processing unit (GPGPU) core, graphics core, or the like.

The front-end unit circuitry 630 may include branch prediction circuitry 632 coupled to instruction cache circuitry 634, which is coupled to an instruction translation lookaside buffer (TLB) 636, which is coupled to instruction fetch circuitry 638, which is coupled to decode circuitry 640. In one example, the instruction cache circuitry 634 is included in the memory unit circuitry 670 rather than the front-end circuitry 630. The decode circuitry 640 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 640 may further include address generation unit (AGU, not shown) circuitry. In one example, the AGU generates an LSU address using forwarded register ports, and may further perform branch forwarding (e.g., immediate offset branch forwarding, LR register branch forwarding, etc.). The decode circuitry 640 may be implemented using various different mechanisms. Examples of suitable mechanisms include, but are not limited to, look-up tables, hardware implementations, programmable logic arrays (PLAs), microcode read only memories (ROMs), etc. In one example, the core 690 includes a microcode ROM (not shown) or other medium that stores microcode for certain macroinstructions (e.g., in decode circuitry 640 or otherwise within the front-end circuitry 630). In one example, the decode circuitry 640 includes a micro-operation (micro-op) or operation cache (not shown) to hold/cache decoded operations, micro-tags, or micro-operations generated during the decode or other stages of the processor pipeline 600. The decode circuitry 640 may be coupled to rename/allocator unit circuitry 652 in the execution engine circuitry 650.

The execution engine circuitry 650 includes the rename/allocator unit circuitry 652 coupled to retirement unit circuitry 654 and a set of one or more scheduler(s) circuitry 656. The scheduler(s) circuitry 656 represents any number of different schedulers, including reservations stations, central instruction window, etc. In some examples, the scheduler(s) circuitry 656 can include arithmetic logic unit (ALU) scheduler/scheduling circuitry, ALU queues, address generation unit (AGU) scheduler/scheduling circuitry, AGU queues, etc. The scheduler(s) circuitry 656 is coupled to the physical register file(s) circuitry 658. Each of the physical register file(s) circuitry 658 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) circuitry 658 includes vector registers unit circuitry, writemask registers unit circuitry, and scalar register unit circuitry. These register units may provide architectural vector registers, vector mask registers, general-purpose registers, etc. The physical register file(s) circuitry 658 is coupled to the retirement unit circuitry 654 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 654 and the physical register file(s) circuitry 658 are coupled to the execution cluster(s) 660. The execution cluster(s) 660 includes a set of one or more execution unit(s) circuitry 662 and a set of one or more memory access circuitry 664. The execution unit(s) circuitry 662 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 656, physical register file(s) circuitry 658, and execution cluster(s) 660 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 664). It should also be understood that where separate pipelines are used, one or more of these pipelines may be out-of-order issue/execution and the rest in-order.

In some examples, the execution engine unit circuitry 650 may perform load store unit (LSU) address/data pipelining to an Advanced Microcontroller Bus (AMB) interface (not shown), and address phase and writeback, data phase load, store, and branches.

The set of memory access circuitry 664 is coupled to the memory unit circuitry 670, which includes data TLB circuitry 672 coupled to data cache circuitry 674 coupled to level 2 (L2) cache circuitry 676. In one example, the memory access circuitry 664 may include load unit circuitry, store address unit circuitry, and store data unit circuitry, each of which is coupled to the data TLB circuitry 672 in the memory unit circuitry 670. The instruction cache circuitry 634 is further coupled to the level 2 (L2) cache circuitry 676 in the memory unit circuitry 670. In one example, the instruction cache 634 and the data cache 674 are combined into a single instruction and data cache (not shown) in L2 cache circuitry 676, level 3 (L3) cache circuitry (not shown), and/or main memory. The L2 cache circuitry 676 is coupled to one or more other levels of cache and eventually to a main memory.

The core 690 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In one example, the core 690 includes logic to support a packed data instruction set architecture extension (e.g., AVX1, AVX2), thereby allowing the operations used by many multimedia applications to be performed using packed data.

### EXAMPLE EXECUTION UNIT(S) CIRCUITRY.

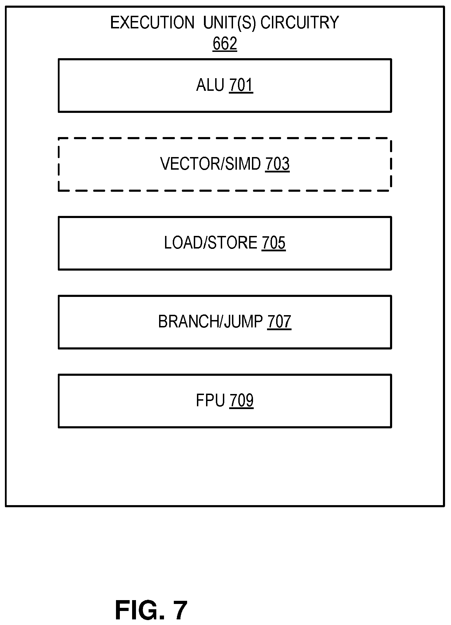

FIG. 7 illustrates examples of execution unit(s) circuitry, such as execution unit(s) circuitry 662 of FIG. 6(B). As illustrated, execution unit(s) circuity 662 may include one or more ALU circuits 701, optional vector/single instruction multiple data (SIMD) circuits 703, load/store circuits 705, branch/jump circuits 707, and/or Floating-point unit (FPU) circuits 709. ALU circuits 701 perform integer arithmetic and/or Boolean operations. Vector/SIMD circuits 703 perform vector/SIMD operations on packed data (such as SIMD/vector registers). Load/store circuits 705 execute load and store instructions to load data from memory into registers or store from registers to memory. Load/store circuits 705 may also generate addresses. Branch/jump circuits 707 cause a branch or jump to a memory address depending on the instruction. FPU circuits 709 perform floating-point arithmetic. The width of the execution unit(s) circuitry 662 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

### EXAMPLE REGISTER ARCHITECTURE.

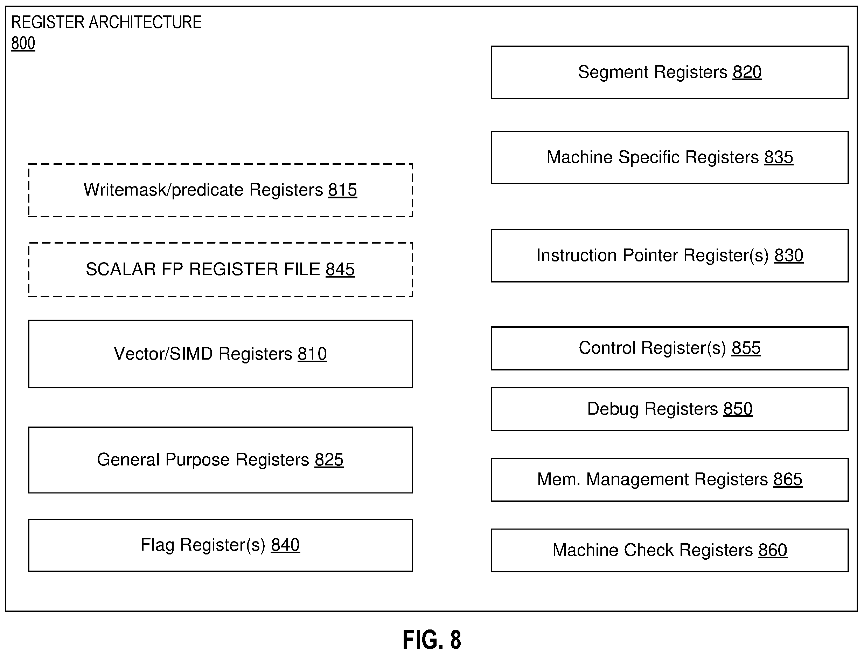

FIG. 8 is a block diagram of a register architecture 800 according to some examples. As illustrated, the register architecture 800 includes vector/SIMD registers 810 that vary from 128-bit to 1,024 bits width. In some examples, the vector/SIMD registers 810 are physically 512-bits and, depending upon the mapping, only some of the lower bits are used. For example, in some examples, the vector/SIMD registers 810 are ZMM registers which are 512 bits: the lower 256 bits are used for YMM registers and the lower 128 bits are used for XMM registers. As such, there is an overlay of registers. In some examples, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the example.

In some examples, the register architecture 800 includes writemask/predicate registers 815. For example, in some examples, there are 8 writemask/predicate registers (sometimes called k0 through k7) that are each 16-bit, 32-bit, 64-bit, or 128-bit in size. Writemask/predicate registers 815 may allow for merging (e.g., allowing any set of elements in the destination to be protected from updates during the execution of any operation) and/or zeroing (e.g., zeroing vector masks allow any set of elements in the destination to be zeroed during the execution of any operation). In some examples, each data element position in a given writemask/predicate register 815 corresponds to a data element position of the destination. In other examples, the writemask/predicate registers 815 are scalable and consists of a set number of enable bits for a given vector element (e.g., 8 enable bits per 64-bit vector element).

The register architecture 800 includes a plurality of general-purpose registers 825. These registers may be 16-bit, 32-bit, 64-bit, etc. and can be used for scalar operations. In some examples, these registers are referenced by the names RAX, RBX, RCX, RDX, RBP, RSI, RDI, RSP, and R8 through R15.

In some examples, the register architecture 800 includes scalar floating-point (FP) register file 845 which is used for scalar floating-point operations on 32/64/80-bit floating-point data using the x87 instruction set architecture extension or as MMX registers to perform operations on 64-bit packed integer data, as well as to hold operands for some operations performed between the MMX and XMM registers.

One or more flag registers 840 (e.g., EFLAGS, RFLAGS, etc.) store status and control information for arithmetic, compare, and system operations. For example, the one or more flag registers 840 may store condition code information such as carry, parity, auxiliary carry, zero, sign, and overflow. In some examples, the one or more flag registers 840 are called program status and control registers.

Segment registers 820 contain segment points for use in accessing memory. In some examples, these registers are referenced by the names CS, DS, SS, ES, FS, and GS.

Machine specific registers (MSRs) 835 control and report on processor performance. Most MSRs 835 handle system-related functions and are not accessible to an application program. Machine check registers 860 consist of control, status, and error reporting MSRs that are used to detect and report on hardware errors.

One or more instruction pointer register(s) 830 store an instruction pointer value. Control register(s) 855 (e.g., CR0-CR4) determine the operating mode of a processor (e.g., processor 470, 480, 438, 415, and/or 500) and the characteristics of a currently executing task. Debug registers 850 control and allow for the monitoring of a processor or core's debugging operations.

Memory (mem) management registers 865 specify the locations of data structures used in protected mode memory management. These registers may include a global descriptor table register (GDTR), interrupt descriptor table register (IDTR), task register, and a local descriptor table register (LDTR) register.

Alternative examples may use wider or narrower registers. Additionally, alternative examples may use more, less, or different register files and registers. The register architecture 800 may, for example, be used in register file / memory 108, or physical register file(s) circuitry 6 58.

### INSTRUCTION SET ARCHITECTURES.

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down through the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an example ADD instruction has a specific opcode and an instruction format that includes an opcode field to specify that opcode and operand fields to select operands (source 1/destination and source2); and an occurrence of this ADD instruction in an instruction stream will have specific contents in the operand fields that select specific operands. In addition, though the description below is made in the context of x86 ISA, it is within the knowledge of one skilled in the art to apply the teachings of the present disclosure in another ISA.

### EXAMPLE INSTRUCTION FORMATS.

Examples of the instruction(s) described herein may be embodied in different formats. Additionally, example systems, architectures, and pipelines are detailed below. Examples of the instruction(s) may be executed on such systems, architectures, and pipelines, but are not limited to those detailed.

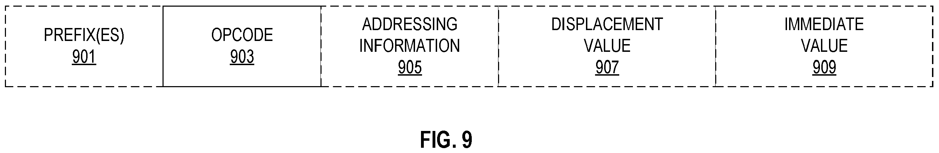

FIG. 9 illustrates examples of an instruction format. As illustrated, an instruction may include multiple components including, but not limited to, one or more fields for: one or more prefixes 901, an opcode 903, addressing information 905 (e.g., register identifiers, memory addressing information, etc.), a displacement value 907, and/or an immediate value 909. Note that some instructions utilize some or all the fields of the format whereas others may only use the field for the opcode 903. In some examples, the order illustrated is the order in which these fields are to be encoded, however, it should be appreciated that in other examples these fields may be encoded in a different order, combined, etc.

The prefix(es) field(s) 901, when used, modifies an instruction. In some examples, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 903 is used to at least partially define the operation to be performed upon a decoding of the instruction. In some examples, a primary opcode encoded in the opcode field 903 is one, two, or three bytes in length. In other examples, a primary opcode can be a different length. An additional 3-bit opcode field is sometimes encoded in another field.

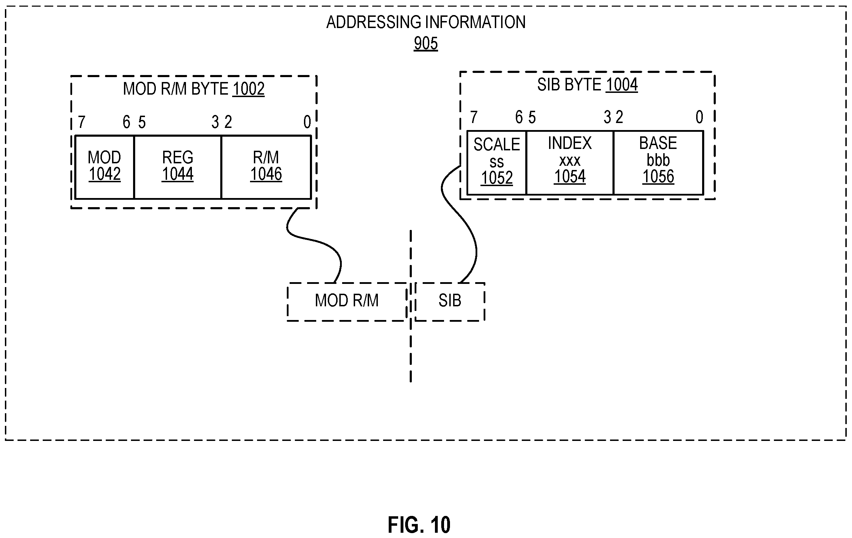

The addressing information field 905 is used to address one or more operands of the instruction, such as a location in memory or one or more registers. FIG. 10 illustrates examples of the addressing information field 905. In this illustration, an optional MOD R/M byte 1002 and an optional Scale, Index, Base (SIB) byte 1004 are shown. The MOD R/M byte 1002 and the SIB byte 1004 are used to encode up to two operands of an instruction, each of which is a direct register or effective memory address. Note that both of these fields are optional in that not all instructions include one or more of these fields. The MOD R/M byte 1002 includes a MOD field 1042, a register (reg) field 1044, and R/M field 1046.

The content of the MOD field 1042 distinguishes between memory access and non-memory access modes. In some examples, when the MOD field 1042 has a binary value of 11 (11b), a register-direct addressing mode is utilized, and otherwise a register-indirect addressing mode is used.

The register field 1044 may encode either the destination register operand or a source register operand or may encode an opcode extension and not be used to encode any instruction operand. The content of register field 1044, directly or through address generation, specifies the locations of a source or destination operand (either in a register or in memory). In some examples, the register field 1044 is supplemented with an additional bit from a prefix (e.g., prefix 901) to allow for greater addressing.

The R/M field 1046 may be used to encode an instruction operand that references a memory address or may be used to encode either the destination register operand or a source register operand. Note the R/M field 1046 may be combined with the MOD field 1042 to dictate an addressing mode in some examples.

The SIB byte 1004 includes a scale field 1052, an index field 1054, and a base field 1056 to be used in the generation of an address. The scale field 1052 indicates a scaling factor. The index field 1054 specifies an index register to use. In some examples, the index field 1054 is supplemented with an additional bit from a prefix (e.g., prefix 901) to allow for greater addressing. The base field 1056 specifies a base register to use. In some examples, the base field 1056 is supplemented with an additional bit from a prefix (e.g., prefix 901) to allow for greater addressing. In practice, the content of the scale field 1052 allows for the scaling of the content of the index field 1054 for memory address generation (e.g., for address generation that uses 2scale * index + base).

Some addressing forms utilize a displacement value to generate a memory address. For example, a memory address may be generated according to 2scale * index + base + displacement, index*scale + displacement, r/m + displacement, instruction pointer (RIP/EIP) + displacement, register + displacement, etc. The displacement may be a 1-byte, 2-byte, 4-byte, etc. value. In some examples, the displacement field 907 provides this value. Additionally, in some examples, a displacement factor usage is encoded in the MOD field of the addressing information field 905 that indicates a compressed displacement scheme for which a displacement value is calculated and stored in the displacement field 907.

In some examples, the immediate value field 909 specifies an immediate value for the instruction. An immediate value may be encoded as a 1-byte value, a 2-byte value, a 4-byte value, etc.

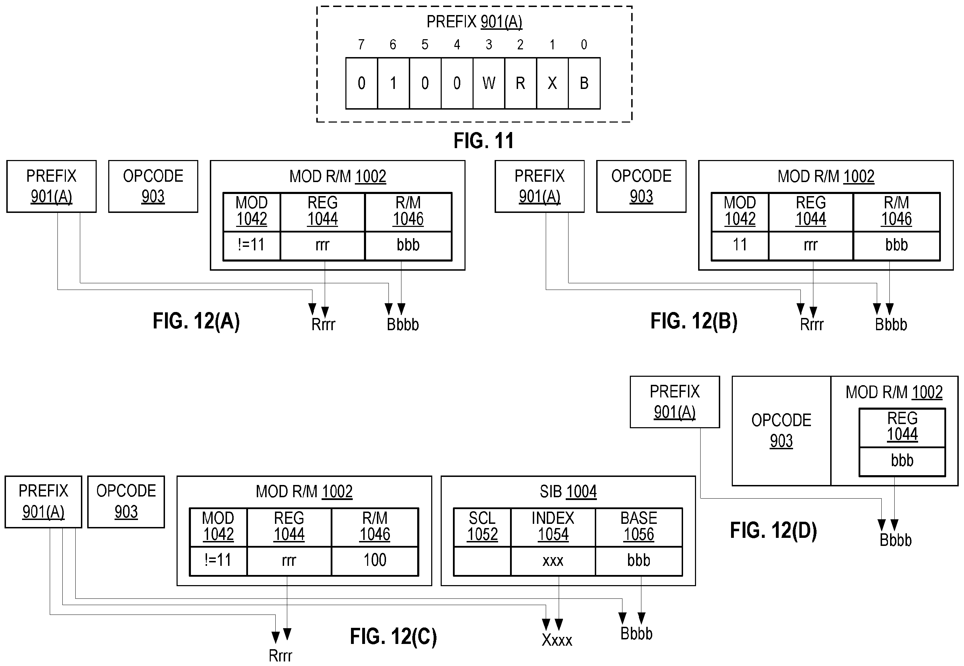

FIG. 11 illustrates examples of a first prefix 901(A). In some examples, the first prefix 901(A) is an example of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 901(A) may specify up to three registers using 3-bit fields depending on the format: 1) using the reg field 1044 and the R/M field 1046 of the MOD R/M byte 1002; 2) using the MOD R/M byte 1002 with the SIB byte 1004 including using the reg field 1044 and the base field 1056 and index field 1054; or 3) using the register field of an opcode.

In the first prefix 901(A), bit positions 7:4 are set as 0100. Bit position 3 (W) can be used to determine the operand size but may not solely determine operand width. As such, when W = 0, the operand size is determined by a code segment descriptor (CS.D) and when W = 1, the operand size is 64-bit.

Note that the addition of another bit allows for 16 (24) registers to be addressed, whereas the MOD R/M reg field 1044 and MOD R/M R/M field 1046 alone can each only address 8 registers.

In the first prefix 901(A), bit position 2 (R) may be an extension of the MOD R/M reg field 1044 and may be used to modify the MOD R/M reg field 1044 when that field encodes a general-purpose register, a 64-bit packed data register (e.g., a SSE register), or a control or debug register. R is ignored when MOD R/M byte 1002 specifies other registers or defines an extended opcode.

Bit position 1 (X) may modify the SIB byte index field 1054.

Bit position 0 (B) may modify the base in the MOD R/M R/M field 1046 or the SIB byte base field 1056; or it may modify the opcode register field used for accessing general purpose registers (e.g., general purpose registers 825).

FIGS. 12(A)-(D) illustrate examples of how the R, X, and B fields of the first prefix 901(A) are used. FIG. 12(A) illustrates R and B from the first prefix 901(A) being used to extend the reg field 1044 and R/M field 1046 of the MOD R/M byte 1002 when the SIB byte 1004 is not used for memory addressing. FIG. 12(B) illustrates R and B from the first prefix 901(A) being used to extend the reg field 1044 and R/M field 1046 of the MOD R/M byte 1002 when the SIB byte 10 04 is not used (register-register addressing). FIG. 12(C) illustrates R, X, and B from the first prefix 901(A) being used to extend the reg field 1044 of the MOD R/M byte 1002 and the index field 1054 and base field 1056 when the SIB byte 10 04 being used for memory addressing. FIG. 12(D) illustrates B from the first prefix 901(A) being used to extend the reg field 1044 of the MOD R/M byte 1002 when a register is encoded in the opcode 903.

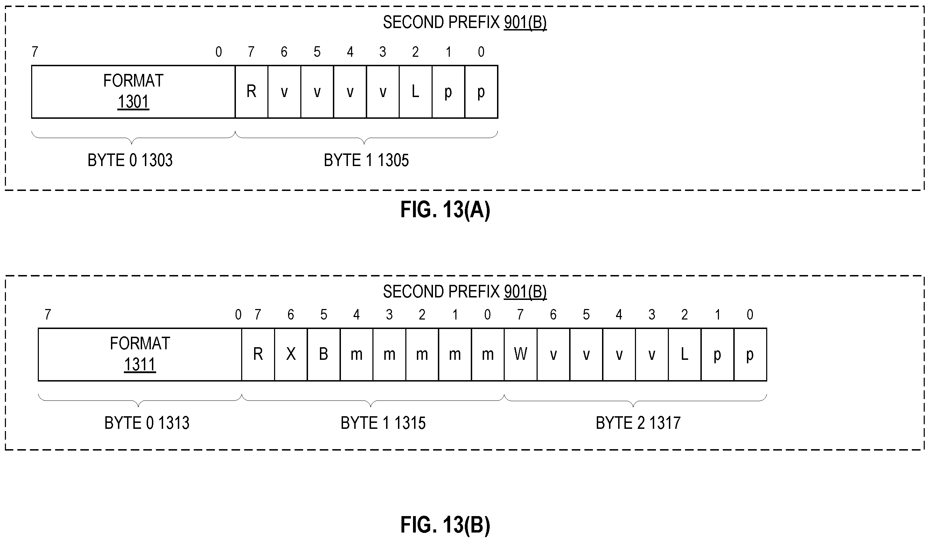

FIGS. 13(A)-(B) illustrate examples of a second prefix 901(B). In some examples, the second prefix 901(B) is an example of a VEX prefix. The second prefix 901(B) encoding allows instructions to have more than two operands, and allows SIMD vector registers (e.g., vector/SIMD registers 810) to be longer than 64-bits (e.g., 128-bit and 256-bit). The use of the second prefix 901(B) provides for three-operand (or more) syntax. For example, previous two-operand instructions performed operations such as A = A + B, which overwrites a source operand. The use of the second prefix 901(B) enables operands to perform nondestructive operations such as A = B + C.

In some examples, the second prefix 901(B) comes in two forms - a two-byte form and a three-byte form. The two-byte second prefix 901(B) is used mainly for 128-bit, scalar, and some 256-bit instructions; while the three-byte second prefix 901(B) provides a compact replacement of the first prefix 901(A) and 3-byte opcode instructions.

FIG. 13(A) illustrates examples of a two-byte form of the second prefix 901(B). In one example, a format field 1301 (byte 0 1303) contains the value C5H. In one example, byte 1 1305 includes an "R" value in bit[7]. This value is the complement of the "R" value of the first prefix 901(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 1046 to encode the instruction operand that references a memory address or encode either the destination register operand or a source register operand.

Instructions that use this prefix may use the MOD R/M reg field 1044 to encode either the destination register operand or a source register operand, or to be treated as an opcode extension and not used to encode any instruction operand.

For instruction syntax that support four operands, vvvv, the MOD R/M R/M field 1046 and the MOD R/M reg field 1044 encode three of the four operands. Bits[7:4] of the immediate value field 909 are then used to encode the third source register operand.

FIG. 13(B) illustrates examples of a three-byte form of the second prefix 901(B). In one example, a format field 1311 (byte 0 1313) contains the value C4H. Byte 1 1315 includes in bits[7:5] "R," "X," and "B" which are the complements of the same values of the first prefix 901(A). Bits[4:0] of byte 1 1315 (shown as mmmmm) include content to encode, as need, one or more implied leading opcode bytes. For example, 00001 implies a 0FH leading opcode, 00010 implies a 0F38H leading opcode, 00011 implies a 0F3AH leading opcode, etc.

Bit[7] of byte 2 1317 is used similar to W of the first prefix 901(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 1046 to encode the instruction operand that references a memory address or encode either the destination register operand or a source register operand.

Instructions that use this prefix may use the MOD R/M reg field 1044 to encode either the destination register operand or a source register operand, or to be treated as an opcode extension and not used to encode any instruction operand.

For instruction syntax that support four operands, vvvv, the MOD R/M R/M field 1046, and the MOD R/M reg field 1044 encode three of the four operands. Bits[7:4] of the immediate value field 909 are then used to encode the third source register operand.

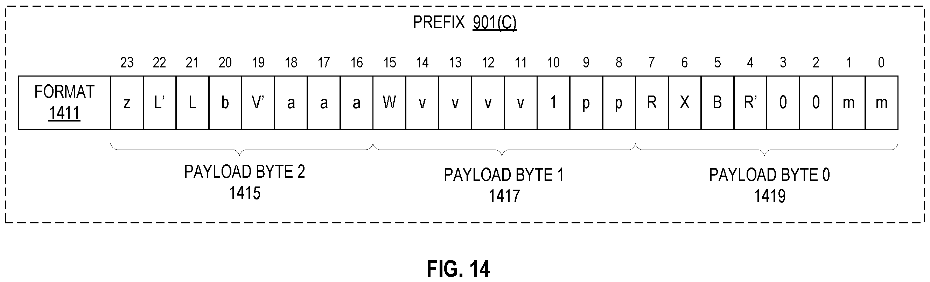

FIG. 14 illustrates examples of a third prefix 901(C). In some examples, the third prefix 901(C) is an example of an EVEX prefix. The third prefix 901(C) is a four-byte prefix.

The third prefix 901(C) can encode 32 vector registers (e.g., 128-bit, 256-bit, and 512-bit registers) in 64-bit mode. In some examples, instructions that utilize a writemask/opmask (see discussion of registers in a previous figure, such as FIG. 8) or predication utilize this prefix. Opmask register allow for conditional processing or selection control. Opmask instructions, whose source/destination operands are opmask registers and treat the content of an opmask register as a single value, are encoded using the second prefix 901(B).

The third prefix 901(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 901(C) is a format field 1411 that has a value, in one example, of 62H. Subsequent bytes are referred to as payload bytes 1415-1419 and collectively form a 24-bit value of P[23:0] providing specific capability in the form of one or more fields (detailed herein).

In some examples, P[1:0] of payload byte 1419 are identical to the low two mm bits. P[3:2] are reserved in some examples. Bit P[4] (R') allows access to the high 16 vector register set when combined with P[7] and the MOD R/M reg field 1044. P[6] can also provide access to a high 16 vector register when SIB-type addressing is not needed. P[7:5] consist of R, X, and B which are operand specifier modifier bits for vector register, general purpose register, memory addressing and allow access to the next set of 8 registers beyond the low 8 registers when combined with the MOD R/M register field 1044 and MOD R/M R/M field 1046. P[9:8] provide opcode extensionality equivalent to some legacy prefixes (e.g., 00 = no prefix, 01 = 66H, 10 = F3H, and 11 = F2H). P[10] in some examples is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 901(A) and second prefix 911(B) and may serve as an opcode extension bit or operand size promotion.

P[18:16] specify the index of a register in the opmask (writemask) registers (e.g., writemask/predicate registers 815). In one example, the specific value aaa = 000 has a special behavior implying no opmask is used for the particular instruction (this may be implemented in a variety of ways including the use of a opmask hardwired to all ones or hardware that bypasses the masking hardware). When merging, vector masks allow any set of elements in the destination to be protected from updates during the execution of any operation (specified by the base operation and the augmentation operation); in other one example, preserving the old value of each element of the destination where the corresponding mask bit has a 0. In contrast, when zeroing vector masks allow any set of elements in the destination to be zeroed during the execution of any operation (specified by the base operation and the augmentation operation); in one example, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While examples are described in which the opmask field's content selects one of a number of opmask registers that contains the opmask to be used (and thus the opmask field's content indirectly identifies that masking to be performed), alternative examples instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differs across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Examples of encoding of registers in instructions using the third prefix 901(C) are detailed in the following tables.

**Table 5: 32-Register Support in 64-bit Mode**

| | 4 | 3 | [2:0] | REG. TYPE | COMMON USAGES |
|---|---|---|---|---|---|
| REG | R' | R | MOD R/M reg | GPR, Vector | Destination or Source |
| VVVV | V' | vvvv | | GPR, Vector | 2nd Source or Destination |
| RM | X | B | MOD R/M R/M | GPR, Vector | 1st Source or Destination |
| BASE | 0 | B | MOD R/M R/M | GPR | Memory addressing |
| INDEX | 0 | X | SIB.index | GPR | Memory addressing |
| VIDX | V' | X | SIB.index | Vector | VSIB memory addressing |

**Table 6: Encoding Register Specifiers in 32-bit Mode**

| | [2:0] | REG. TYPE | COMMON USAGES |
|---|---|---|---|
| REG | MOD R/M reg | GPR, Vector | Destination or Source |
| VVVV | vvvv | GPR, Vector | 2^{nd} Source or Destination |
| RM | MOD R/M R/M | GPR, Vector | 1^{st} Source or Destination |
| BASE | MOD R/M R/M | GPR | Memory addressing |
| INDEX | SIB.index | GPR | Memory addressing |
| VIDX | SIB.index | Vector | VSIB memory addressing |

**Table 7: Opmask Register Specifier Encoding**

| | [2:0] | REG. TYPE | COMMON USAGES |
|---|---|---|---|
| REG | MOD R/M Reg | k0-k7 | Source |
| VVVV | vvvv | k0-k7 | 2^{nd} Source |
| RM | MOD R/M R/M | k0-k7 | 1^{st} Source |
| {k1} | aaa | k0-k7 | Opmask |

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

One or more aspects of at least one example may be implemented by representative instructions stored on a machine-readable medium which represents various logic within the processor, which when read by a machine causes the machine to fabricate logic to perform the techniques described herein. Such representations, known as "intellectual property (IP) cores" may be stored on a tangible, machine readable medium and supplied to various customers or manufacturing facilities to load into the fabrication machines that make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors and/or system features described herein. Such examples may also be referred to as program products.

### EMULATION (INCLUDING BINARY TRANSLATION, CODE MORPHING, ETC.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

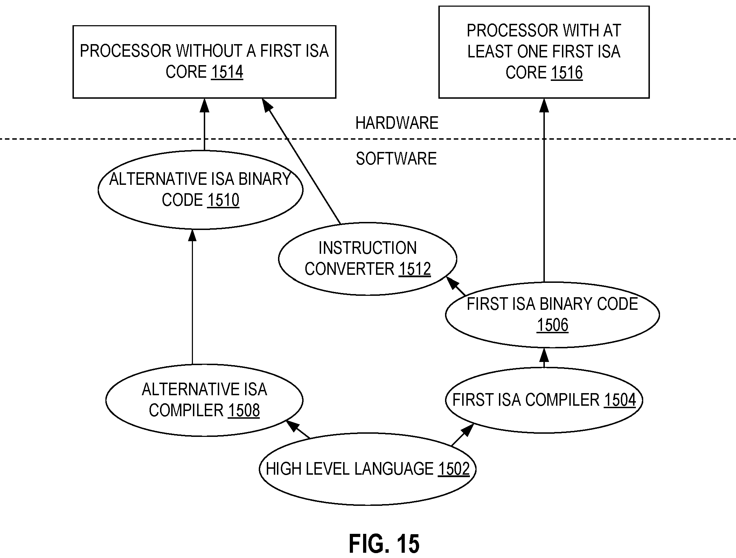

FIG. 15 is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. FIG. 15 shows a program in a high-level language 1502 may be compiled using a first ISA compiler 1504 to generate first ISA binary code 1506 that may be natively executed by a processor with at least one first ISA core 1516. The processor with at least one first ISA core 1516 represents any processor that can perform substantially the same functions as an Intel@ processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 1504 represents a compiler that is operable to generate first ISA binary code 1506 (e.g., object code) that can, with or without additional linkage processing, be executed on the processor with at least one first ISA core 1516. Similarly, FIG. 15 shows the program in the high-level language 1502 may be compiled using an alternative ISA compiler 1508 to generate alternative ISA binary code 1510 that may be natively executed by a processor without a first ISA core 1514. The instruction converter 1512 is used to convert the first ISA binary code 1506 into code that may be natively executed by the processor without a first ISA core 1514. This converted code is not necessarily to be the same as the alternative ISA binary code 1510; however, the converted code will accomplish the general operation and be made up of instructions from the alternative ISA. Thus, the instruction converter 1512 represents software, firmware, hardware, or a combination thereof that, through emulation, simulation or any other process, allows a processor or other electronic device that does not have a first ISA processor or core to execute the first ISA binary code 1506.

References to "one example," "an example," etc., indicate that the example described may include a particular feature, structure, or characteristic, but every example may not necessarily include the particular feature, structure, or characteristic. Moreover, such phrases are not necessarily referring to the same example. Further, when a particular feature, structure, or characteristic is described in connection with an example, it is submitted that it is within the knowledge of one skilled in the art to affect such feature, structure, or characteristic in connection with other examples whether or not explicitly described.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e. A and B, A and C, B and C, and A, B and C).

The specification and drawings are, accordingly, to be regarded in an illustrative rather than a restrictive sense. It will, however, be evident that various modifications and changes may be made thereunto without departing from the broader spirit and scope of the disclosure as set forth in the claims.

The following examples pertain to further embodiments. Example 1 includes 1 includes an apparatus comprising: a work queue circuit to store one or more descriptors; an arbiter circuit to dispatch a descriptor from the work queue, wherein the descriptor comprises an operation field capable of specifying an inter-domain operation to be performed, a submitter Process Address Space Identifier (PASID) field capable of specifying a submitter PASID of a submitter process to be executed on a processor, and a handle for a destination PASID associated with an address space of another process; and an engine circuit to: verify, based at least in part on the submitter PASID and the destination PASID handle, whether the submitter process is permitted to access the address space of the other process; and process the descriptor based at least in part on the inter-domain operation specified by the operation field.

Example 2 includes the apparatus of example 1, wherein the inter-domain operation to be performed is at least one of: a copy operation, a fill operation, a compare operation, a compare pattern operation, and a flush operation. Example 3 includes the apparatus of example 1, further comprising a cache to store a bit map associated with one or more submitter processes that are allowed to submit the inter-domain operation.

Example 4 includes the apparatus of example 3, wherein a hardware accelerator comprises the work queue, the arbiter, the engine, and the cache. Example 5 includes the apparatus of example 3, wherein an invalidation command is to be issued in response to a determination that the bit map has been modified. Example 6 includes the apparatus of example 1, wherein a hardware accelerator comprises the work queue, the arbiter, and the engine.

Example 7 includes the apparatus of example 6, wherein the hardware accelerator is to perform data movement or data transformation for data to be transmitted between the processor and a storage device. Example 8 includes the apparatus of example 6, wherein a System On Chip (SOC) device comprises the hardware accelerator and the processor. Example 9 includes the apparatus of example 1, wherein the work queue is to be configured as a Shared Work Queue (SWQ) or a Dedicated Work Queue (DWQ), wherein the SWQ is to be shared by multiple software applications, whereas the DWQ is to be assigned to a single software application. Example 10 includes the apparatus of example 1, wherein the processor comprises one or more processor cores to execute the submitter process.

Example 11 includes a method comprising: storing one or more descriptors in a work queue; dispatching, at an arbiter, a descriptor from the work queue, wherein the descriptor comprises an operation field capable of specifying an inter-domain operation to be performed, a submitter Process Address Space Identifier (PASID) field capable of specifying a submitter PASID of a submitter process to be executed on a processor, and a handle for a destination PASID associated with an address space of another process; and verifying, at an engine, based at least in part on the submitter PASID and the destination PASID handle, whether the submitter process is permitted to access the address space of another process; and processing, at the engine, the descriptor based at least in part on the inter-domain operation specified by the operation field.

Example 12 includes the method of example 11, further comprising performing the inter-domain operation by executing at least one of: a copy operation, a fill operation, a compare operation, a compare pattern operation, and a flush operation. Example 13 includes the method of example 11, further comprising storing a bit map, associated with one or more submitter processes that are allowed to submit the inter-domain operation, in a cache.

Example 14 includes a system comprising: a processor to execute one or more processes; an Input/Output (IO) fabric to transfer data between an accelerator device and a storage unit; the accelerator device comprising: a work queue circuit to store one or more descriptors; an arbiter circuit to dispatch a descriptor from the work queue, wherein the descriptor comprises an operation field capable of specifying an inter-domain operation to be performed, a submitter Process Address Space Identifier (PASID) field capable of specifying a submitter PASID of a submitter process to be executed on the processor, and a handle for a destination PASID associated with an address space of another process; and an engine circuit to: verify, based at least in part on the submitter PASID and the destination PASID handle, whether the submitter process is permitted to access the address space of the other process; and process the descriptor based at least in part on the inter-domain operation specified by the operation field.

Example 15 includes the system of example 14, wherein the inter-domain operation to be performed is at least one of: a copy operation, a fill operation, a compare operation, a compare pattern operation, and a flush operation. Example 16 includes the system of example 14, wherein the accelerator device comprises a cache to store a bit map associated with one or more submitter processes that are allowed to submit the inter-domain operation. Example 17 includes the system of example 16, wherein an invalidation command is to be issued in response to a determination that the bit map has been modified.

Example 18 includes the system of example 14, wherein the hardware accelerator is to perform data movement or data transformation for data to be transmitted between the processor and a storage device. Example 19 includes the system of example 14, wherein a System On Chip (SOC) device comprises the hardware accelerator and the processor. Example 20 includes the system of example 14, wherein the work queue is to be configured as a Shared Work Queue (SWQ) or a Dedicated Work Queue (DWQ), wherein the SWQ is to be shared by multiple software applications, whereas the DWQ is to be assigned to a single software application.

Example 21 includes an apparatus comprising means to perform an operation as set forth in any preceding example. Example 22 includes machine-readable storage including machine-readable instructions, when executed, to implement an operation or realize an apparatus as set forth in any preceding example.

In various embodiments, one or more operations discussed with reference to FIGs. 1 et seq. may be performed by one or more components (interchangeably referred to herein as "logic") discussed with reference to any of the figures.

In some embodiments, the operations discussed herein, e.g., with reference to FIGs. 1 et seq., may be implemented as hardware (e.g., logic circuitry), software, firmware, or combinations thereof, which may be provided as a computer program product, e.g., including one or more tangible (e.g., non-transitory) machine-readable or computer-readable media having stored thereon instructions (or software procedures) used to program a computer to perform a process discussed herein. The machine-readable medium may include a storage device such as those discussed with respect to the figures.

Further, while various embodiments described herein use the term System-on-a-Chip or System-on-Chip ("SoC" or "SOC") to describe a device or system having a processor and associated circuitry (e.g., Input/Output ("I/O") circuitry, power delivery circuitry, memory circuitry, etc.) integrated monolithically into a single Integrated Circuit ("IC") die, or chip, the present disclosure is not limited in that respect. For example, in various embodiments of the present disclosure, a device or system can have one or more processors (e.g., one or more processor cores) and associated circuitry (e.g., Input/Output ("I/O") circuitry, power delivery circuitry, etc.) arranged in a disaggregated collection of discrete dies, tiles and/or chiplets (e.g., one or more discrete processor core die arranged adjacent to one or more other die such as memory die, I/O die, etc.). In such disaggregated devices and systems, the various dies, tiles and/or chiplets can be physically and/or electrically coupled together by a package structure including, for example, various packaging substrates, interposers, active interposers, photonic interposers, interconnect bridges, and the like. The disaggregated collection of discrete dies, tiles, and/or chiplets can also be part of a System-on-Package ("SoP").

Additionally, such computer-readable media may be downloaded as a computer program product, wherein the program may be transferred from a remote computer (e.g., a server) to a requesting computer (e.g., a client) by way of data signals provided in a carrier wave or other propagation medium via a communication link (e.g., a bus, a modem, or a network connection).

Reference in the specification to "one embodiment" or "an embodiment" means that a particular feature, structure, and/or characteristic described in connection with the embodiment may be included in at least an implementation. The appearances of the phrase "in one embodiment" in various places in the specification may or may not be all referring to the same embodiment.

Also, in the description and claims, the terms "coupled" and "connected," along with their derivatives, may be used. In some embodiments, "connected" may be used to indicate that two or more elements are in direct physical or electrical contact with each other. "Coupled" may mean that two or more elements are in direct physical or electrical contact. However, "coupled" may also mean that two or more elements may not be in direct contact with each other, but may still cooperate or interact with each other.

Thus, although embodiments have been described in language specific to structural features and/or methodological acts, it is to be understood that claimed subject matter may not be limited to the specific features or acts described. Rather, the specific features and acts are disclosed as sample forms of implementing the claimed subject matter.

## Claims

1. An apparatus comprising:
a work queue circuit to store one or more descriptors;
an arbiter circuit to dispatch a descriptor from the work queue, wherein the descriptor comprises an operation field capable of specifying an inter-domain operation to be performed, a submitter Process Address Space Identifier (PASID) field capable of specifying a submitter PASID of a submitter process to be executed on a processor, and a handle for a destination PASID associated with an address space of another process; and
an engine circuit to:
verify, based at least in part on the submitter PASID and the destination PASID handle, whether the submitter process is permitted to access the address space of the other process; and
process the descriptor based at least in part on the inter-domain operation specified by the operation field.

2. The apparatus of claim 1, wherein the inter-domain operation to be performed is at least one of: a copy operation, a fill operation, a compare operation, a compare pattern operation, and a flush operation.

3. The apparatus of any one of claims 1 to 2, further comprising a cache to store a bit map associated with one or more submitter processes that are allowed to submit the inter-domain operation, or wherein a hardware accelerator comprises the work queue, the arbiter, the engine, and the cache, or wherein an invalidation command is to be issued in response to a determination that the bit map has been modified.

4. The apparatus of any one of claims 1 to 3, wherein a hardware accelerator comprises the work queue, the arbiter, and the engine, or wherein the hardware accelerator is to perform data movement or data transformation for data to be transmitted between the processor and a storage device, or wherein a System On Chip (SOC) device comprises the hardware accelerator and the processor.

5. The apparatus of any one of claims 1 to 4, wherein the work queue is to be configured as a Shared Work Queue (SWQ) or a Dedicated Work Queue (DWQ), wherein the SWQ is to be shared by multiple software applications, whereas the DWQ is to be assigned to a single software application.

6. The apparatus of any one of claims 1 to 5, wherein the processor comprises one or more processor cores to execute the submitter process.

7. A method comprising:
storing one or more descriptors in a work queue;
dispatching, at an arbiter, a descriptor from the work queue, wherein the descriptor comprises an operation field capable of specifying an inter-domain operation to be performed, a submitter Process Address Space Identifier (PASID) field capable of specifying a submitter PASID of a submitter process to be executed on a processor, and a handle for a destination PASID associated with an address space of another process; and
verifying, at an engine, based at least in part on the submitter PASID and the destination PASID handle, whether the submitter process is permitted to access the address space of another process; and
processing, at the engine, the descriptor based at least in part on the inter-domain operation specified by the operation field.

8. The method of claim 7, further comprising performing the inter-domain operation by executing at least one of: a copy operation, a fill operation, a compare operation, a compare pattern operation, and a flush operation, or further comprising storing a bit map, associated with one or more submitter processes that are allowed to submit the inter-domain operation, in a cache.

9. A system comprising:
a processor to execute one or more processes;
an Input/Output (IO) fabric to transfer data between an accelerator device and a storage unit;
the accelerator device comprising:
a work queue circuit to store one or more descriptors;
an arbiter circuit to dispatch a descriptor from the work queue, wherein the descriptor comprises an operation field capable of specifying an inter-domain operation to be performed, a submitter Process Address Space Identifier (PASID) field capable of specifying a submitter PASID of a submitter process to be executed on the processor, and a handle for a destination PASID associated with an address space of another process; and
an engine circuit to:
verify, based at least in part on the submitter PASID and the destination PASID handle, whether the submitter process is permitted to access the address space of the other process; and
process the descriptor based at least in part on the inter-domain operation specified by the operation field.

10. The system of claim 9, wherein the inter-domain operation to be performed is at least one of: a copy operation, a fill operation, a compare operation, a compare pattern operation, and a flush operation.

11. The system of any one of claims 9 to 10, wherein the accelerator device comprises a cache to store a bit map associated with one or more submitter processes that are allowed to submit the inter-domain operation, or wherein an invalidation command is to be issued in response to a determination that the bit map has been modified.

12. The system of any one of claims 9 to 11, wherein the hardware accelerator is to perform data movement or data transformation for data to be transmitted between the processor and a storage device, or wherein a System On Chip (SOC) device comprises the hardware accelerator and the processor.

13. The system of any one of claims 9 to 12, wherein the work queue is to be configured as a Shared Work Queue (SWQ) or a Dedicated Work Queue (DWQ), wherein the SWQ is to be shared by multiple software applications, whereas the DWQ is to be assigned to a single software application.

14. An apparatus comprising means to perform a method as set forth in any preceding claim.

15. Machine-readable storage including machine-readable instructions, when executed, to implement a method or realize an apparatus as set forth in any preceding claim.
